Europäisches Patentamt

European Patent Office

Office européen des brevets

(19)

(11) Veröffentlichungsnummer: **0 508 262 B1**

# (12) EUROPÄISCHE PATENTSCHRIFT

(45) Veröffentlichungstag der Patentschrift: **20.09.95**

(21) Anmeldenummer: **92105449.0**

(22) Anmeldetag: **30.03.92**

(51) Int. Cl.⁶: **C08F 257/02**, C08F 285/00,
//(C08F257/02,212:08),
(C08F257/02,220:44),
(C08F257/02,220:18)

(54) **Verfahren zur Herstellung von alpha-Methylstyrolpolymerisaten.**

(30) Priorität: **09.04.91 DE 4111388**

(43) Veröffentlichungstag der Anmeldung:
**14.10.92 Patentblatt 92/42**

(45) Bekanntmachung des Hinweises auf die
Patenterteilung:
**20.09.95 Patentblatt 95/38**

(84) Benannte Vertragsstaaten:
**DE ES FR GB IT**

(56) Entgegenhaltungen:
**EP-A- 0 051 336**
**EP-A- 0 083 946**
**DE-A- 3 730 205**
**GB-A- 2 050 391**
**US-A- 3 367 995**

(73) Patentinhaber: **BAYER AG**

**D-51368 Leverkusen (DE)**

(72) Erfinder: **Piejko, Karl-Erwin, Dr.**
**Unterscheider Weg 7a**
**W-5060 Bergisch-Gladbach 2 (DE)**
Erfinder: **Ostarek, Ralph, Dr.**
**Halskestrasse 13**
**W-4000 Düsseldorf 1 (DE)**
Erfinder: **Lindner, Christian, Dr.**
**Im Wasserblech 11**
**W-5000 Köln 80 (DE)**

EP 0 508 262 B1

**Beschreibung**

$\alpha$-Methylstyrolpolymerisate dienen als Bestandteile besonders wärmestandfester thermoplastischer Formmassen, z.B. ABS- und PVC-Formmassen. Sie können nach allgemein üblichen Methoden, wie Polymerisation in Lösung, Masse oder wäßriger Emulsion hergestellt werden (vgl. EP-A-51336, US-A-3,367,995 und EP-A-83946).

Die Emulsionspolymerisation ist technisch einfach, kann chargenweise oder halbkontinuierlich durchgeführt werden und liefert teilchenförmige Polymerisate. Sie ist aber - insbesondere mit nur schwer polymerisierbaren Monomeren wie $\alpha$-Methylstyrol - häufig schlecht reproduzierbar und verläuft ungleichförmig.

Ein gleichförmiger Polymerisationsverlauf ist besonders bei halbkontinuierlichen Verfahren wichtig, bei denen Monomere eine bestimmte Zeit kontinuierlich in den Polymerisationsreaktor eingeführt werden. Es ist dabei notwendig, daß die Monomeren so schnell abreagieren, wie sie dem Reaktor zugeführt werden. Gleichförmiger Polymerisationsverlauf mit niedrigen stationären Monomer-Konzentrationen ist bei der Emulsionspolymerisation von $\alpha$-Methylstyrol-Monomerenmischungen besonders schwierig zu erreichen.

Gegenstand der Erfindung ist ein Verfahren zur Herstellung von $\alpha$-Methylstyrolpolymerisaten durch Emulsionspolymerisation in einem wäßrigen Medium, in welchem man in einer ersten Stufe eine Styrol-Monomerenmischung aus 60 bis 90 Gew.-% Styrol, 10 bis 40 Gew.-% Acrylnitril und 0 bis 30 Gew.-% anderer Vinylmonomerer polymerisiert und in einer zweiten Stufe eine $\alpha$-Methylstyrol-Monomerenmischung aus 80 bis 35 Gew.-% $\alpha$-Methylstyrol, 10 bis 40 Gew.-% Acrylnitril und 0 bis 55 Gew.-% Methylmethacrylat oder Styrol, wobei die Menge der Styrol-Monomermischung 0,5 bis 8 Gew.-% der gesamten Monomeren ist und die Polymerisation durch einen radikalischen Initiator ausgelöst wird.

Die Polymerisation kann auch in Gegenwart eines Kautschuk-Latex ausgeführt werden unter Bildung von Pfropfpolymerisaten der $\alpha$-Methylstyrolpolymerisate auf einen Kautschuk. Ferner kann die Polymerisation chargenweise oder halbkontinuierlich ausgeführt werden.

Das Verfahren zeichnet sich durch gleichmäßigen Verlauf der Polymerisation aus und liefert scherstabile Latices aus chemisch einheitlichen $\alpha$-Methylstyrol-Polymerisaten.

Die Styrol-Monomerenmischung besteht aus 60 bis 90 Gew.-%, bevorzugt 65 bis 80 Gew.-%, Styrol; 10 bis 40 Gew.-%, bevorzugt 20 bis 35 Gew.-%, Acrylnitril und 0 bis 30 Gew.-% weiterer Vinylmonomerer wie $\alpha$-Methylstyrol und Methylmethacrylat. Bevorzugt fehlen die weiteren Vinylmonomeren.

Die $\alpha$-Methylstyrol-Monomerenmischung besteht aus 80 bis 35, bevorzugt 80 bis 65, insbesondere 75 bis 67 Gew.-% $\alpha$-Methylstyrol; 10 bis 40, bevorzugt 20 bis 35, insbesondere 25 bis 33 Gew.-% Acrylnitril und zusätzlich 0 bis 55 Gew.-% Methylmethacrylat und/oder Styrol. Bevorzugt fehlen die zusätzlichen Monomeren.

Die Menge Styrol-Monomerenmischung ist 0,5 bis 8 Gew.-%, bevorzugt 1 bis 7 Gew.-%, insbesondere 3 bis 5,5 Gew.-%, der gesamten Monomeren.

Die angegebene Menge an Styrol-Monomerenmischung ist kritisch. Wird sie nicht eingehalten, dann tritt entweder der erfindungsgemäße Effekt nicht ein oder die Eigenschaften der Polymerisate, z.B. ihre Wärmeformbeständigkeit, werden schlechter.

Das erfindungsgemäße Verfahren kann man wie folgt durchführen:

In einem thermostatisierten Reaktionskessel werden eine wäßrige Emulgatorlösung und die Styrol-Monomerenmischung vorgelegt und durch ein geeignetes Initiatorsystem die radikalische Polymerisation ausgelöst. Dann wird sofort oder nach Abklingen der exothermen Reaktion, bevorzugt nach 5 bis 180 min, insbesondere nach 10 bis 60 min, die $\alpha$-Methylstyrol-Monomerenmischung zugegeben, bevorzugt gleichmäßig verteilt über einen Zeitraum von 1 bis 24 Stunden, insbesondere 2 bis 12 Stunden. Es kann auch das Initiatorsystem in der wäßrigen Emulgatorlösung vorgelegt und die Styrol-Monomerenmischung eindosiert werden, wobei anschließend wie oben beschrieben verfahren wird.

In einer bevorzugten Ausführungsform des Verfahrens polymerisiert man in Gegenwart von Kautschuk-Latices mit Kautschuk-Teilchendurchmessern ($d_{50}$) von 60 bis 800 nm. Geeignete Kautschuke weisen Glastemperaturen unter 0 °C auf und stellen beispielsweise Dienhomo- und -copolymerisate, Ethylencopolymerisate, Acrylatkautschuke und/oder Silikonkautschuke bzw. Mischungen davon dar. Acrylatkautschuke und Silikonkautschuke sind bevorzugt. Die Kautschuke sind mindestens teilvernetzt und besitzen Gelgehalte von größer 30 %, bevorzugt größer 75 %.

Die Menge Kautschuk im resultierenden Gesamtpolymerisat ist 0 bis 50 Gew.-%, bevorzugt 10 bis 40 %, besonders bevorzugt 15 bis 30 Gew.-%. Bei dieser bevorzugten Ausführungsform wird ein Teil des gebildeten Polymerisats chemisch an die Kautschukteilchen gebunden. Es entsteht ein Pfropfpolymerisat. Da das Ausmaß der Pfropfung unter anderem von der stationären Monomerenkonzentration abhängt, ist es bei dieser Ausführungsform des Verfahrens unerläßlich, einen gleichförmigen Polymerisationsverlauf mit niedrigen stationären Monomerkonzentrationen zu erreichen. Die Reaktionstemperaturen, Mengenverhältnisse der Monomeren und der wäßrigen Phasen, die Emulgatoren, Initiatoren sowie sonstige Hilfs- und Zusatzstoffe können wie bei bekannten Verfahren zur Emulsionspolymerisation von α-Methylstyrol-Monomerenmischungen gewählt werden (vgl. EP-A 331 999).

Als Emulgatoren im erfindungsgemäßen Verfahren besonders geeignet sind anionische Emulgatoren wie Carbonsäuren und Sulfonsäuren bzw. deren Salze wie Harzsäuren, sulfonierte Fettsäuren, Alkylsulfonsäuren, Arylsulfonsäuren bzw. deren Alkalimetallsalze.

Der pH-Wert der Polymerisationslösung liegt zwischen 1 und 12. Im Falle der Verwendung der bevorzugten Carboxylat-Emulgatoren liegt der pH-Wert insbesondere zwischen 8 und 11.

Die Verwendung von Carboxylat-Emulgatoren bei pH-Werten zwischen 8 und 11 ist besonders bevorzugt.

In einer bevorzugten Variante des Verfahrens werden zu Beginn der Polymerisation nur ein Teil des oder der Emulgatoren vorgelegt und der Rest während einer bestimmten Zeit kontinuierlich zugefügt. Dieser Zeitraum der Emulgatordosierung liegt bevorzugt zwischen der halben und der doppelten Zeit der kontinuierlichen Monomerzugabe, entspricht insbesondere der Zeit der Monomerzugabe, d.h., Monomere und Emulgator werden gleichzeitig und gleich lange zugefügt.

Der Anteil des vorgelegten Emulgators beträgt 5 bis 80 % der Gesamtemulgatormenge, bevorzugt 10 bis 50 %.

Besonders geeignete Initiatorsysteme für das bevorzugte Polymerisationsverfahren in Gegenwart von Kautschuken sind die in der DE-OS 3 730 205 beschriebenen Kombinationen aus organischen Hydroperoxiden und Ascorbinsäure.

Bevorzugte Varianten des erfindungsgemäßen Verfahrens arbeiten mit anionischen Emulgatoren, wobei ein Teil der Emulgatoren wie beschrieben zudosiert wird.

Das erfindungsgemäße Verfahren führt zu einer schnellen Startreaktion, einem raschen Monomerverbrauch entsprechend der Monomerdosierung und zu scherstabilen Latices.

Der rasche Monomerverbrauch führt zu niedrigen stationären Monomerkonzentrationen und damit chemisch einheitlichen Polymeren auch außerhalb der azeotropen Zusammensetzung. Dies ist bei α-Methylstyrolpolymerisaten besonders wichtig, da z.B. längere α-Methylstyrolsequenzen zu thermisch instabilen Polymeren führen. Aufgrund der verbesserten Reaktionsführung werden also reproduzierbar verbesserte Polymerisate erhalten, die trotz des teilweisen Ersatzes von α-Methylstyrol durch Styrol keine Einbuße, z.B. in der Wärmeformbeständigkeit aufweisen.

Die erfindungsgemäß hergestellten Polymerisate eignen sich besonders als Bestandteile wärmeformbeständiger Kunststofflegierungen wie ABS, ASA, PVC- oder Polycarbonat-Mischungen.

Beispiele

Beispiele 1

In einem Reaktor werden 649 g eines grobteiligen Polybutylacrylatkautschuklatex mit einem Feststoffgehalt von 37 Gew.-%, einem mittleren Teilchendurchmesser ($d_{50}$-Wert) von 480 nm und einem Gelgehalt von 92 Gew.-%, 821 g deionisiertes Wasser und 10 mg Eisen(II)sulfat vorgelegt und unter leichtem Stickstoffstrom auf 61°C erhitzt. Bei dieser Temepratur werden folgende Lösungen zugefügt.

Lösung a:       4 g Cumolhydroperoxid
                          90 g Wasser
Lösung b:       1 g Ascorbinsäure
                          50 g Wasser.

Man startet die Polymerisation durch Zugabe einer Mischung aus 35 g Styrol und 15 g Acrylnitril (Lösung c).

Nach 35 Minuten werden verteilt über einen Zeitraum von 6 Stunden und 40 Minuten folgende Lösungen zudosiert:

Lösung d:       682 g α-Methylstyrol
                          282 g Acrylnitril
Lösung e:       350 g Wasser
                          35 g Natriumsalz disproportionierter Abietinsäure
                          36 g 1 normale Natronlauge
                          5 g Cumolhydroperoxid
Lösung f:       380 g Wasser
                          3 g Ascorbinsäure.

Nach Beenden des Zudosierens wird noch 4 Stunden bei 61°C gerührt.

Zu den in Tabelle 1 angegebenen Zeiten (Start durch Zugabe der Lösung c: t = O) werden Proben entnommen und der Feststoffgehalt bestimmt. Aus dem tatsächlichen Feststoffgehalt $F_t$ und einem aus dem Verhältnis der Menge an zugegebener Monomere und dem Gesamtgewicht des Ansatzes zur Zeit t berechneten (theoretisch maximal erreichbaren) Feststoffgehalt $F_m$ wird eine Umsatzzahl x berechnet nach $x = F_t/F_m$.

Eine hohe Umsatzzahl x bedeutet, daß zum Zeitpunkt der Probenahme ein hoher Anteil der im Ansatz vorhandenen Monomere polymerisiert ist. x = 100 % bedeutet vollständigen Monomerumsatz.

Durch Rühren von 100 g des resultierenden Latex mit einem Hochgeschwindigkeitsrührer (10.000 U/min) bis zur Koagulation wird eine Vergleichszahl für die Scherstabilität bestimmt: Zeit bis zur Koagulation. Längere Zeiten bedeuten dabei höhere Scherstabilitäten. Entsprechende Werte sind ebenfalls in Tabelle 1 aufgeführt.

## Beispiel 2

Man verfährt wie in Beispiel 1. Als Lösungen a und b werden folgende Lösungen eingesetzt:

Lösung a:  2 g Cumolhydroperoxid
           90 g Wasser
Lösung b:  0,5 g Ascorbinsäure
           50 g Wasser.

Die Ergebnisse des Versuchs sind in Tabelle 1 aufgeführt.

## Vergleichsbeispiel 3

Man verfährt wie in Beispiel 1. Als Lösungen c und d werden folgende Lösungen eingesetzt:

Lösung c:  35 g $\alpha$-Methylstyrol
           15 g Acrylnitril
Lösung d:  627 g $\alpha$-Methylstyrol
           283 g Acrylnitril.

Die Ergebnisse des Versuchs sind in Tabelle 1 aufgeführt.

Tabelle 1

| Umsatzzahlen und Scherstabilitäten aus den Beispielen 1, 2 und Vergleichsbeispiel 3 | | | |
|---|---|---|---|
| Zeit t | Beispiel-Nr. | | |
| | 1 | 2 | 3* |
| | Umsatzzahl x [%] | | |
| 1 h 15 min | 80 | 86,1 | 73 |
| 3 h 15 min | 76 | 91,2 | 47,5 |
| 5 h 15 min | 89 | 92,8 | 38,3 |
| 7 h 15 min | 92 | 90,7 | 49,6 |
| 11h 15 min | 100 | 100 | 98 |
| Scherstabilität [sec] | 100 | 80 | 3 |

* Vergleichsbeispiel

Die erfindungsgemäßen Beispiele 1 und 2 zeigen gleichmäßig hohe Umsatzzahlen x im Verlauf der Polymerisation und gute Scherstabilitätszahlen der resultierenden Latices, während das Vergleichsbeispiel 3 niedrige Umsatzzahlen x während der Polymerisation und eine schlechte Scherstabilität aufweist. Die niedrigen Umsatzzahlen zeigen eine geringe Polymerisationsrate und hohe stationäre Monomerkonzentrationen im Vergleichsbeispiel.

## Beispiel 4

In einem Reaktor werden Lösung a und b vorgelegt und unter leichtem Stickstoffstrom auf 77 °C erhitzt.

Lösung a:  1400 g Wasser
           8,5 g Natriumsalz disproportionierter Abietinsäure

4,8 g 1 normale Natronlauge

Lösung b:    4,6 g Kaliumperoxodisulfat

180 g Wasser

Man startet den Versuch durch Zugabe einer Mischung aus 50,4 g Styrol und 19,6 g Acrylnitril (Lösung c).

Nach 20 Minuten werden über einen Zeitraum von 5 Stunden folgende Lösungen zudosiert.

Lösung d:    918 g α-Methylstyrol

412 g Acrylnitril

1,3 g tert. Dodecylmercaptan

Lösung e:    850 g Wasser

42 g Natriumsalz disproportionierter Abietinsäure

24 g 1 normale Natronlauge

Nach Beenden des Zudosierens wird noch 4 Stunden bei 83°C geführt.

Der Beginn der Polymerisation ist zwei Minuten nach dem Start zu erkennen.

Analog Beispiel 1 werden Umsatzzahlen nach 1 h 20 min und 2 h 20 min bestimmt. Die Werte sind in Tabelle 2 aufgeführt.

Vergleichsbeispiel 5

Man verfährt wie in Beispiel 4. Als Lösung c wird folgende Lösung eingesetzt:

Lösung c:    30 g α-Methylstyrol

13 g Acrylnitril

Der Beginn der Polymerisation ist 30 Minuten nach dem Start zu erkennen.

Die Ergebnisse des Versuchs sind in Tabelle 2 aufgeführt.

Tabelle 2

| Umsatzzahlen aus dem Beispiel 5 und dem Vergleichsbeispiel 6 | | |
|---|---|---|
| Zeit t | Beispiel-Nr. | |
| | 4 | 5* |
| | Umsatzzahl x [%] | |
| 1 h 20 min | 69 | 48 |
| 2 h 20 min | 93 | 79 |

* Vergleichsbeispiel

Beispiel 6

In einem Reaktor werden Lösung a und b vorgelegt und unter leichtem Stickstoffstrom auf 77°C erhitzt.

Lösung a:    2250 g Wasser

50,5 g Natriumsalz disproportionierter Abietinsäure

28,7 g 1 normale Natronlauge

Lösung b:    4,6 g Kaliumperoxodisulfat

180 g Wasser

Man startet den Versuch durch Zugabe einer Mischung aus 32,4 g Styrol und 12,6 g Acrylnitril (Lösung c).

Nach 20 Minuten wird über einen Zeitraum von 5 Stunden folgende Lösung zudosiert:

Lösung d:    976 g α-Methylstyrol

379 g Acrylnitril

1,3 g tert. Dodecylmercaptan

Nach Beenden des Zudosierens wird noch 4 Stunden bei 83°C gerührt

Der Beginn der Polymerisation ist eine Minute nach dem Start zu erkennen.

Analog Beispiel 1 wird eine Umsatzzahl nach 1 h 20 min zu 71 % bestimmt.

Vergleichsbeispiel 7

Man verfährt wie in Beispiel 6. Als Lösung c wird folgende Lösung eingesetzt:

Lösung c: 32 g α-Methylstyrol

12 g Acrylnitril

Der Beginn der Polymerisation ist 20 Minuten nach dem Start zu erkennen.

Analog Beispiel 1 wird eine Umsatzzahl nach 1 h 20 min zu 63 % bestimmt.

Beispiele 8 bis 10

55 Gew.-% Polyvinylchlorid und 45 Gew.-% der in den Beispielen 1, 2 und 3 (Vergleich) hergestellten Polymerisate (nach Isolierung durch Koagulation mit Magnesiumsulfatlösung und anschließende Trocknung) werden zu homogenen Formmassen gewalzt und bei 190 °C zu Prüfplatten verpreßt. Die Prüfplatten weisen jeweils eine Vicat-Temperatur (nach DIN 553460, Typ B) von 94 °C auf.

**Patentansprüche**

1. Verfahren zur Herstellung von α-Methylstyrolpolymerisaten durch Emulsionspolymerisation in einem wäßrigen Medium, in welchem man in einer ersten Stufe eine Styrolmonomerenmischung aus 60 bis 90 Gew.-% Styrol, 10 bis 40 Gew.-% Acrylnitril und 0 bis 30 Gew.-% anderer Vinylmonomerer polymerisiert und in einer zweiten Stufe eine α-Methylstyrolmonomerenmischung aus 80 bis 35 Gew.-% α-Methylstyrol, 10 bis 40 Gew.-% Acrylnitril und 0 bis 55 Gew.-% Methylmethacrylat und/oder Styrol, wobei die Menge Styrolmonomerenmischung 0,5 bis 8 Gew.-% der gesamten Monomeren ist und die Polymerisation durch einen radikalischen Initiator ausgelöst wird.

2. Verfahren nach Anspruch 1, dadurch gekennzeichnet, daß die Polymerisation in Gegenwart eines Kautschuklatex mit Kautschukteilchen eines mittleren Durchmessers ($d_{50}$) von 60 bis 800 nm in einer solchen Menge durchgeführt wird, daß im resultierenden Gesamtpolymerisat 0 bis 50 Gew.-% des Kautschuks enthalten sind.

3. Verfahren nach Anspruch 1, dadurch gekennzeichnet, daß als Initiator ein Gemisch aus organischen Hydroperoxiden und Ascorbinsäure verwendet wird.

**Claims**

1. A process for the preparation of α-methylstyrene polymers by emulsion polymerisation in an aqueous medium, in which a styrene-monomer mixture of 60 to 90% by wt. of styrene, 10 to 40% by wt. of acrylonitrile and 0 to 30% by wt. of other vinyl monomers is polymerised in a first stage, and an α-methylstyrene-monomer mixture of 80 to 35% by wt. of α-methylstyrene, 10 to 40% by wt. of acrylonitrile and 0 to 55% by wt. of methyl methacrylate and/or styrene is polymerised in a second stage, the quantity of styrene-monomer mixture being 0.5 to 8% by wt. of the total monomers and polymerisation being initiated by a radical initiator.

2. A process according to claim 1, characterised in that polymerisation is carried out in the presence of a rubber latex with rubber particles having a mean diameter ($d_{50}$) of 60 to 800 nm in a quantity such that the resulting total polymer contains 0 to 50% by wt. of the rubber.

3. A process according to claim 1, characterised in that the initiator used is a mixture of organic hydroperoxides and ascorbic acid.

**Revendications**

1. Procédé de préparation de polymères de l'α-méthylstyrène par polymérisation en émulsion dans un milieu aqueux, dans lequel, dans un premier stade, on polymérise un mélange styrène/autres monomères consistant en 60 à 90 % en poids de styrène, 10 à 40 % en poids d'acrylonitrile et 0 à 30 % en poids d'autres monomères vinyliques et, dans un deuxième stade, on polymérise un mélange α-méthylstyrène/autres monomères consistant en 80 à 35 % en poids d'α-méthylstyrène, 10 à 40 % en poids d'acrylonitrile et 0 à 55 % en poids de méthacrylate de méthyle et/ou de styrène, la quantité du mélange styrène/autres monomères représentant de 0,5 à 8 % du poids des monomères totaux et la polymérisation étant déclenchée à l'aide d'un inducteur radicalaire.

2. Procédé selon revendication 1, caractérisé en ce que la polymérisation est réalisée en présence d'un latex de caoutchouc en particules à un diamètre moyen $d_{50}$ de 60 à 800 nm, en quantité telle que, dans le polymère global obtenu, il y ait de 0 à 50 % en poids de caoutchouc.

3. Procédé selon la revendication 1, caractérisé en ce que l'on utilise en tant qu'inducteur un mélange d'hydroperoxydes organiques et de l'acide ascorbique.